# EUROPEAN PATENT SPECIFICATION

(11) **EP 2 973 602 B1**
(45) Date of publication and mention of the grant of the patent: **30.08.2017**
(21) Application number: 14776380.9
(22) Date of filing: 19.02.2014
(51) Int. Cl.: G01T 3/00

(54) **NUCLEAR RADIATION DOSIMETER USING STRESS INDUCED BIREFRINGENCE CHANGES IN FIBER OPTIC CABLES**
KERNSTRAHLUNGSDOSIMETER MIT BELASTUNGSINDUZIERTEN DOPPELBRECHUNGSÄNDERUNGEN IN GLASFASERKABELN
DOSIMÈTRE DE RAYONNEMENT NUCLÉAIRE UTILISANT DES CHANGEMENTS DE BIRÉFRINGENCE INDUITS PAR LA CONTRAINTE DANS DES CÂBLES À FIBRE OPTIQUE

(30) Priority: 14.03.2013 US 201313803104
(43) Date of publication of application: 20.01.2016
(73) Proprietor: Westinghouse Electric Company LLC, Cranberry Township, PA 16066 (US)
(72) Inventor: HEIBEL, Michael D., Harrison City, Pennsylvania 15636 (US); FLAMMANG, Robert W., Pittsburgh, Pennsylvania 15235 (US)
(74) Representative: Gallo, Wolfgang
(86) International application number: PCT/US2014/017071
(87) International publication number: WO 2014/158473

(56) References cited:
- WO-A2-2011/154216
- WO-A2-2011/154216
- JP-A- H09 218 270
- JP-A- 2011 021 923
- US-A- 2 982 855
- US-A1- 2005 105 665
- US-A1- 2008 237 485
- US-A1- 2008 237 485

## Description

### Field of the Invention

The invention relates generally to nuclear radiation dosimeter devices and methods for measuring and monitoring neutron dose received by a nuclear reactor vessel and, related components and structures. In particular, the devices and methods include measuring a change in optical stress birefringence patterns produced in fiber optic cables. More particularly, the devices and methods do not require the use of a radioactive material.

### Background

Radiation exposure data can be used in assessing and managing various issues relating to the operation of light water nuclear reactors at commercial nuclear plants. For example, radiation fluence data can assist in determining whether reactor components are suitable for continued operation or if replacement is necessary. Thus, it is desirable for the nuclear industry to have available devices and methods to accurately and timely obtain radiation exposure data for a nuclear reactor.

There are various devices and methods known in the art for measuring and monitoring neutron dose received by a reactor vessel and related components and structures in a nuclear power plant. These known devices and methods typically rely on technologies that utilize radiation damage estimates or neutron activation of selected materials to produce radioactive materials with well characterized decay radiation schemes to determine the total neutron exposure received. Further, these known devices and methods require the handling and use of radioactive materials for collecting and/or analyzing the measurement data.

For example, during plant shutdown, radioactive material can be installed in the reactor vessel at strategic locations and retained therein for operation of the next cycle of the nuclear power plant. During operation, the radioactive material absorbs neutrons that pass through the reactor vessel. Following the operation cycle, during the next refueling outage, the radioactive material is removed and evaluated to determine the number of neutrons that interacted with this material while it was contained within the reactor vessel during plant operation. Based on this information, a determination can be made as to the total neutron exposure of the reactor vessel and/or related components and structures.

US 2982855 discloses a wave guide grid positioned in and around the core of a particle reactor and containing a neutron-reactive gas. The neutron flux is determined based on a change in attenuation and phase shift of a microwave signal directed through this wave guide grid.

There are several disadvantages associated with known devices and methods for measuring and monitoring neutron fluence in a reactor vessel, such as, the need to use a radioactive material to absorb the neutrons and the resulting contamination exposure to personnel when the radioactive material containing the neutrons is removed and analyzed.

Thus, there is a need in the art to develop devices and methods for measuring and monitoring neutron dose which include one or more of the following features: uses commercially available measurement tools, obtains the measurement at a location external to the nuclear reactor vessel, and minimizes the potential for personnel radioactive contamination exposure in collecting and analyzing the results.

### SUMMARY OF THE INVENTION

In one aspect, the invention provides a device to measure neutron fluence in a pre-selected location in a nuclear power plant. The pre-selected location includes a presence of neutrons. The device includes a fiber optic cable having a length and an outer surface which forms a cavity extending through the length of the fiber optic cable. The cavity can include one or more cores formed therein. The device further includes a neutron sensitive material substantially uniformly contained in the cavity. The neutron sensitive material can be substantially uniformly contained in each of the one or more cores. The neutron sensitive material is effective to at least partially absorb the neutrons which pass through the fiber optic cable to produce a gas. The gas can be selected from the group consisting of hydrogen, helium and mixtures thereof. The device also includes an optical measurement tool for measuring a change in optical stress birefringence pattern which occurs from a pressure build-up of the gas in the fiber optic cable, and a means for determining an amount of the gas in the fiber optic cable and an amount of the neutrons absorbed by the neutron sensitive material to determine total neutron exposure in the pre-selected location.

In certain embodiments, the neutron sensitive material is lithium-6 and the lithium-6 at least partially absorbs the neutrons to produce one or more hydrogen atoms and one or more helium atoms.

Further, in certain embodiments, the neutron fluence measurement is obtained without employing a radioactive material.

In another aspect, the invention provides a method of measuring neutron fluence at a pre-selected location in a nuclear power plant, the pre-selected location comprising a presence of neutrons. The method includes obtaining a fiber optic cable having an outer cylindrical surface and an inner cavity. The inner cavity has one or more cores formed therein. A neutron sensitive material is substantially uniformly introduced into the one or more cores. The method also includes obtaining a first optical stress birefringence pattern of the fiber optic cable, positioning the fiber optic cable containing said one or more cores at said pre-selected location, producing a gas selected from the group consisting of hydrogen, helium and mixtures thereof from the interaction of neutrons with the neutron sensitive material, obtaining a second optical stress birefringence pattern of the fiber optic cable, measuring a change in optical stress birefringence pattern which is produced in the fiber optic cable from pressure build-up of the gas, and determining an amount of the gas in the fiber optic cable and the number of neutrons absorbed by the neutron sensitive material to determine the total neutron exposure in the pre-selected location.

### BRIEF DESCRIPTION OF THE DRAWINGS

A further understanding of the invention can be gained from the following description of the preferred embodiments when read in conjunction with the accompanying drawings in which:
Figure 1A shows an expected optical birefringence pattern of a fiber optic cable having Sensor 1 and Sensor 2 at atmospheric pressure prior to installation of the cable near a reactor vessel, in accordance with certain embodiments of the invention.
Figure 1B shows an expected optical birefringence pattern of the fiber optic cable in Figure 1A following exposure to neutrons near a reactor vessel during an operating cycle of a nuclear power plant, in accordance with certain embodiments of the invention.
Figure 2 shows a plot of gas pressure versus fractional percentage of reacted lithium, in accordance with certain embodiments of the invention.

### DETAILED DESCRIPTION OF THE INVENTION

The invention relates to devices and methods for measuring neutron fluence in a reactor vessel and/or components and /or structures related thereto. These devices and methods include the use of fiber optic cable. Further, these devices and methods exclude the use of a radioactive material. For example, the devices are constructed without employing a radioactive material. The invention measures neutron fluence by measuring the change in the optical stress birefringence pattern produced in the fiber optic cable.

In general, in accordance with the invention, a fiber optic cable is installed in a pre-selected location where neutron fluence measurement is desired. Typically, a plurality of fiber optic cables is installed. The fiber optic cables had a pre-determined length. The length of the plurality of fiber optic cables can be the same or different. The pre-selected location includes, for example, the reactor vessel and/or related components and/or structures in a nuclear power plant. In certain embodiments, related components and structures include the containment building and the equipment position therein. Further, in certain embodiments, the neutron fluence in the reactor vessel can be measured from a location external to the reactor by installing the fiber optic cables of the invention in a related component or structure positioned outside of the reactor vessel, such that the amount of neutrons passing out of the reactor vessel is measured.

The fiber optic cables include a hollow cavity with at least one or more cores located within the cavity. The one or more cores contain, e.g., are at least partially filled with, a neutron sensitive material. Neutrons which are present in the pre-selected location pass through the fiber optic cable and are at least partially absorbed by the neutron sensitive material positioned therein. This interaction of the neutrons with the neutron sensitive material produces a build-up of gas within the cavity of the fiber optic cable which causes a change, e.g., increase, in pressure therein. The change in pressure in the cavity of the fiber optic cable produces a change of the stress distribution in the fiber optic cable. By measuring the change in the stress optical birefringence pattern produced by the change in pressure in the cavity of the fiber optic cable, the amount of gas can be deduced and therefore, the number of neutrons absorbed in the neutron sensitive material. This will, in turn, allow the total neutron exposure of the pre-selected location to be determined.

Suitable fiber optic cables for use in the invention can be selected from those known in the art. As described above, the fiber optic cables are hollow. Thus, an outer surface, e.g., cylindrical in shape, forms an inner cavity. Further, the length of the fiber optic cables can vary. The inner cavity includes the one or more cores. The inner cavity and the one or more cores extend throughout the length of the fiber optic cable.

Suitable neutron sensitive materials for use in the invention can be selected from those known in the art. As described above, the neutron sensitive material is effective to absorb neutrons. In certain embodiments, the neutron sensitive material is lithium-6. This interaction of the neutrons and the neutron sensitive material causes the production of a gas which results in a build-up of pressure in the cavity of the fiber optic cable. In certain embodiments, hydrogen atoms, helium atoms or a mixture thereof can be produced.

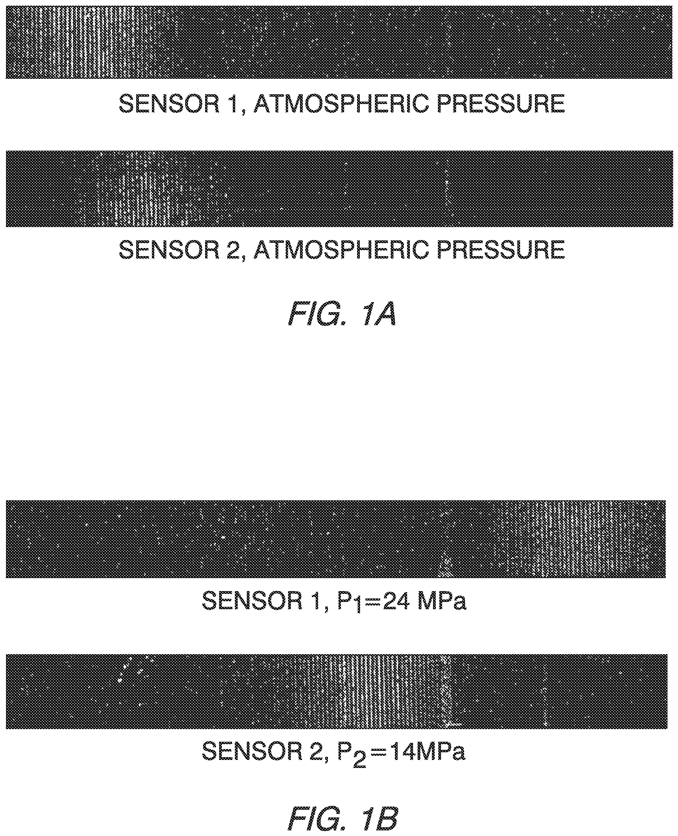

It is known in the art that the optical birefringence pattern obtained from the fiber optic cable can change in a predictable manner as a function of applied stress. In certain embodiments of the invention, the change in the birefringence pattern as a function of the change in the stress distribution in the cable can be readily determined using white-light interferometric techniques. For example, analysis by Wojtek J. Bock and Waclaw Ubanczyk entitled "Multiplexed system of white-light interferometric hydrostatic pressure sensors based on highly birefringence fibers" (Proc. Of SPIE, Vol. 2838/243, 1996) utilizes such technique and recites that fiber sensing employing white-light interferometric techniques offers several significant advantages such as the possibility of absolute measurements (with no initialization problem), the possibility of multiplexing a number of single-point sensors into a larger measuring system, and a lower noise level than coherent systems. Thus, the optical birefringence pattern obtained from the fiber optic cable prior to the interaction of the neutron sensitive material and neutrons (and the build-up gas and pressure) is different than that obtained following such interaction. Figure 1A shows a birefringence pattern for a fiber optic cable having Sensor 1 and Sensor 2 at atmospheric pressure. The birefringence pattern shown in Figure 1A is prior to the fiber optic cable being installed in a location wherein there is the presence of neutrons. This is demonstrated in Figure 1B which shows the birefringence pattern for the fiber optic cable shown in Figure 1A with the exception that the birefringence pattern shown in Figure 1B is following installation in a location having neutrons present. The change in the birefringence pattern is caused by the change in the stress distribution in the cable which is caused by the change in the pressure applied to the cable. In Figure 1B, Sensor 1 and Sensor 2 are each at a pressure of 24 MPa and 14 MPa, respectively. Thus, Figure 1A represents the "before" pattern and Figure 1B represents the "after" pattern.

When the fiber optic cable is installed in a location such that neutrons pass through the fiber optic cable, a change in the stress distribution across the cross section of the cable results in a change in the associated birefringence pattern. The change in the birefringence pattern can be used to determine an accurate numerical change in the applied stress distribution. A change in the internal pressure in the cable can be readily and accurately used to determine the number of neutrons interacting with the neutron sensitive material.

In certain embodiments, this invention employs the activation of a controlled amount of the neutron sensitive material, such as Li-6, substantially uniformly packed into one or more hollow axial cores in a length of a fiber optic cable to produce a change in the internal pressure in the cable core as the Li-6 interacts with neutrons passing through the cable length. The change in pressure can be used to determine the number of neutrons interacting with the core material.

For the purpose of demonstration, the following description relates to installation or introduction of fiber optic cables in the reactor vessel, however, this process is equally applicable to installation of the fiber optic cables in a related component or structure. A plurality of fiber optic cables having pre-selected length(s) (i.e. pieces) is installed in strategic locations throughout the reactor vessel and in the space between the reactor vessel and the reactor vessel support structure. The number of fiber optic cables employed can vary and can depend on the size and configuration of the particular component and/or structure wherein the neutron fluence is being measured. The fiber optic cables are installed when the nuclear reactor plant is in shutdown mode. The fiber optic cables remain in the reactor vessel during the following operating cycle and then are subsequently extracted during the next scheduled refueling outage.

Prior to introduction or installation in the reactor vessel, an optical birefringence pattern is obtained from the fiber optic cables. Following extraction, another optical birefringence pattern is obtained from the fiber optic cables and compared to the original optical birefringence pattern obtained from the fiber optic cables prior to installation in the reactor vessel. An assessment is made as to the change in pattern and as a result, the number of neutrons that passed through the reactor vessel is determined.

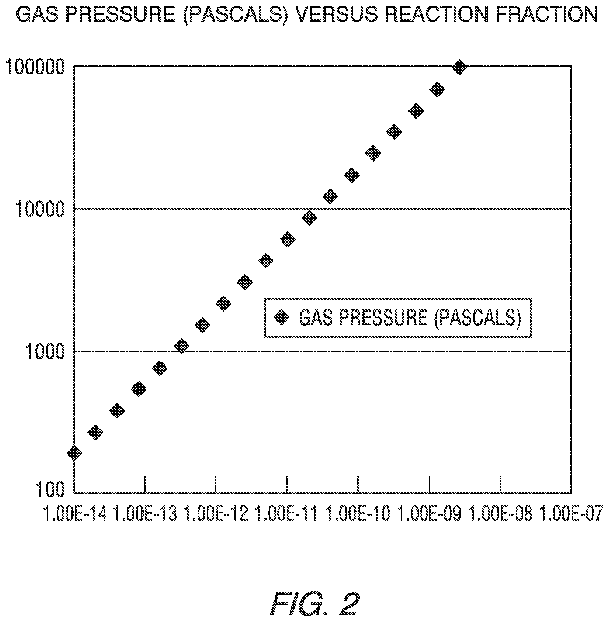

Figure 2 is a graph of gas pressure (Pa) versus fractional percentage of lithium-6 reacted. The plot demonstrates the change (i.e., increase) in pressure inside the cavity of the fiber optic cable for a given amount of reacted lithium-6 as a result of neutron absorption.

## Claims

1. A device to measure neutron fluence in a pre-selected location in a nuclear power plant, the pre-selected location comprising a presence of neutrons, the device **characterized by** comprising:
a fiber optic cable having a length and an outer surface which forms a cavity, the cavity extending through the length of the fiber optic cable;
a neutron sensitive material substantially uniformly contained in the cavity, the neutron sensitive material effective to at least partially absorb the neutrons to produce a gas;
an optical measurement tool for measuring a change in an optical stress birefringence pattern of the fiber optic cable, the change produced from a build-up of pressure as a result of the gas produced; and
a means for determining an amount of the gas in the fiber optic cable and an amount of neutrons absorbed by the neutron sensitive material to determine total neutron exposure in the pre-selected location.

2. The device of claim 1, wherein the cavity has one or more cores formed therein.

3. The device of claim 2, wherein the one or more cores each substantially uniformly contains the neutron sensitive material.

4. The device of claim 1, wherein the gas is selected from the group consisting of hydrogen, helium and mixtures thereof

5. The device of claim 1, wherein its construction excludes the presence of a radioactive material.

6. The device of claim 1, wherein the neutron sensitive material is lithium-6.

7. The device of claim 6, wherein the lithium-6 at least partially absorbs the neutrons to produce one or more hydrogen atoms and one or more helium atoms.

8. The device of claim 1, wherein the cavity has one or more cores formed therein and the cavity and the one or more cores extend through the length of the fiber optic cable;
a neutron sensitive material is substantially uniformly contained in the one or more cores, and the gas is selected from the group consisting of hydrogen, helium and mixtures thereof.

9. A method for measuring neutron fluence at a pre-selected location in a nuclear power plant, the pre-selected location comprising a presence of neutrons, the method **characterized by** comprising:
obtaining a fiber optic cable having an outer cylindrical surface and an inner cavity, the inner cavity having one or more cores formed therein;
substantially uniformly introducing a neutron sensitive material into the one or more cores;
obtaining a first optical stress birefringence pattern of the fiber optic cable;
positioning the fiber optic cable containing said one or more cores at said pre-selected location,
producing a gas selected from the group consisting of hydrogen, helium and mixtures thereof from the interaction of neutrons with the neutron sensitive material;
obtaining a second optical stress birefringence pattern of the fiber optic cable after having been positioned in the pre-selected location;
measuring a change in the first and second optical stress birefringence patterns, the change being produced from pressure build-up of the gas in the fiber optic cable; and
determining an amount of the gas in the fiber optic cable and the number of neutrons absorbed by the neutron sensitive material to determine the total neutron exposure in the pre-selected location.

10. The method of claim 9, wherein the measuring is conducted by an optical measuring tool.

## Patentansprüche

1. Vorrichtung zur Messung der Neutronenfluenz an einer vorgewählten Stelle in einem Kernkraftwerk, wobei die vorgewählte Stelle das Vorhandensein von Neutronen umfasst, wobei die Vorrichtung **dadurch gekennzeichnet ist, dass** sie Folgendes umfasst:
ein Glasfaserkabel mit einer Länge und einer äußeren Oberfläche, die einen Hohlraum bildet, wobei sich der Hohlraum durch die Länge des Glasfaserkabels hindurch erstreckt;
ein neutronensensitives Material, das im Wesentlichen gleichmäßig verteilt in dem Hohlraum enthalten ist, wobei das neutronensensitive Material die Neutronen zumindest zum Teil absorbiert, um ein Gas zu erzeugen;
ein optisches Messwerkzeug zur Messung einer Veränderung im belastungsinduzierten Doppelbrechungsmuster des Glasfaserkabels durch Belastung, wobei die Veränderung durch den Aufbau eines Drucks als Ergebnis des erzeugten Gases erzeugt wird; und
ein Mittel zur Bestimmung einer Menge des Gases in dem Glasfaserkabel und einer Menge an durch das neutronensensitive Material absorbierten Neutronen, um die gesamte Neutronenexposition an der vorgewählten Stelle zu bestimmen.

2. Vorrichtung nach Anspruch 1, wobei der Hohlraum einen oder mehrere darin ausgebildete Kerne aufweist.

3. Vorrichtung nach Anspruch 2, wobei der eine oder die mehreren Kerne jeweils das im Wesentlichen gleichmäßig verteilte neutronensensitive Material umfassen.

4. Vorrichtung nach Anspruch 1, wobei das Gas ausgewählt ist aus der Gruppe bestehend aus Wasserstoff, Helium und Mischungen davon.

5. Vorrichtung nach Anspruch 1, wobei ihre Konstruktion das Vorliegen eines radioaktiven Materials ausschließt.

6. Vorrichtung nach Anspruch 1, wobei das neutronensensitive Material Lithium-6 ist.

7. Vorrichtung nach Anspruch 6, wobei das Lithium-6 zumindest zum Teil die Neutronen absorbiert, um ein oder mehrere Wasserstoffatome und ein oder mehrere Heliumatome zu erzeugen.

8. Vorrichtung nach Anspruch 1, wobei der Hohlraum einen oder mehrere darin ausgebildete Kerne aufweist, und der Hohlraum und der eine oder die mehreren Kerne sich durch die Länge des Glasfaserkabels erstrecken;
wobei ein neutronensensitives Material im Wesentlichen gleichmäßig verteilt in dem einen oder den mehreren Kernen enthalten ist, und das Gas ausgewählt ist aus der Gruppe bestehend aus Wasserstoff, Helium und Mischungen davon.

9. Verfahren zur Messung der Neutronenfluenz an einer vorgewählten Stelle in einem Kernkraftwerk, wobei die vorgewählte Stelle das Vorhandensein von Neutronen umfasst, wobei das Verfahren **dadurch gekennzeichnet ist, dass** es folgende Schritte umfasst:
Erhalten eines Glasfaserkabels mit einer äußeren zylindrischen Oberfläche und einem inneren Hohlraum, wobei der innere Hohlraum einen oder mehrere darin ausgebildete Kerne aufweist;
im Wesentlichen gleichmäßiges Einbringen eines neutronensensitiven Materials in den einen oder die mehreren Kerne;
Erhalten eines ersten belastungsinduzierten optischen Doppelbrechungsmusters des Glasfaserkabels;
Positionieren des Glasfaserkabels, das den einen oder die mehreren Kerne enthält, an der vorgewählten Stelle,
Erzeugen eines Gases ausgewählt aus der Gruppe bestehend aus Wasserstoff, Helium und Mischungen davon, durch die Wechselwirkung von Neutronen mit dem neutronensensitiven Material;
Erhalten eines zweiten belastungsinduzierten optischen Doppelbrechungsmusters des Glasfaserkabels, nachdem es an der vorgewählten Stelle positioniert wurde;
Messen einer Veränderung zwischen dem ersten und zweiten belastungsinduzierten optischen Belastungs-Doppelbrechungsmuster, wobei die Veränderung durch den Druckaufbau des Gases in dem Glasfaserkabel erzeugt wird; und
Bestimmen einer Menge an Gas in dem Glasfaserkabel und der Anzahl von durch das neutronensensitive Material absorbierten Neutronen, um die gesamte Neutronenexposition an der vorgewählten Stelle zu bestimmen.

10. Verfahren nach Anspruch 9, wobei die Messung durch ein optisches Messwerkzeug erfolgt.

## Revendications

1. Dispositif pour mesurer la fluence de neutrons dans un emplacement présélectionné dans une centrale nucléaire, l'emplacement présélectionné comprenant la présence des neutrons, le dispositif **étant caractérisé** en comprenant :
un câble à fibre optique ayant une longueur et une surface extérieure formant une cavité, la cavité s'étendant à travers la longueur du câble à fibre optique ;
un matériau sensible aux neutrons contenu sensiblement de manière uniforme dans la cavité, le matériau sensible aux neutrons étant effectif pour au moins partiellement absorber les neutrons afin de produire un gaz ;
un outil de mesure optique pour mesurer un changement dans un motif de biréfringence du câble à fibre optique introduit par une contrainte, le changement étant produit par une montée en pression résultant du gaz produit ; et
des moyens pour déterminer une quantité du gaz dans le câble à fibre optique et une quantité des neutrons absorbés par le matériau sensible aux neutrons, afin de déterminer l'exposition totale aux neutrons dans l'emplacement présélectionné.

2. Dispositif selon la revendication 1, dans lequel la cavité présente un ou plusieurs coeurs formés dans celle-ci.

3. Dispositif selon la revendication 2, dans lequel chacun de l'un ou plusieurs coeurs contient le matériau sensible aux neutrons sensiblement de manière uniforme.

4. Dispositif selon la revendication 4, dans lequel le gaz est sélectionné dans le groupe consistant en l'hydrogène, l'hélium et leurs mélanges.

5. Dispositif selon la revendication 1, dans lequel sa construction exclut la présence d'un matériau radioactif.

6. Dispositif selon la revendication 1, dans lequel le matériau sensible aux neutrons est le lithium-6.

7. Dispositif selon la revendication 6, dans lequel le lithium-6 au moins partiellement absorbe les neutrons pour produire un ou plusieurs atomes d'hydrogène et un ou plusieurs atomes d'hélium.

8. Dispositif selon la revendication 1, dans lequel la cavité présente un ou plusieurs coeurs formés dans celle-ci, et la cavité et l'un ou plusieurs coeurs s'étendent à travers la longueur du câble à fibre optique ;
dans lequel un matériau sensible aux neutrons est contenu sensiblement de manière uniforme dans l'un ou plusieurs coeurs, et le gaz est sélectionné dans le groupe consistant en l'hydrogène, l'hélium et leurs mélanges.

9. Procédé pour mesurer la fluence de neutrons dans un emplacement présélectionné dans une centrale nucléaire, l'emplacement présélectionné comprenant la présence des neutrons, le procédé **étant caractérisé** en comprenant les étapes consistant à :
obtenir un câble à fibre optique ayant une surface extérieure cylindrique et une cavité interne, la cavité interne ayant un ou plusieurs coeurs formés dans celle-ci ;
introduire un matériau sensible aux neutrons sensiblement de manière uniforme dans l'un ou plusieurs coeurs ;
obtenir un premier motif de biréfringence optique introduit par une contrainte du câble à fibre optique ;
positionner le câble à fibre optique contenant l'un ou plusieurs coeurs dans l'emplacement présélectionné ;
produire un gaz sélectionné dans le groupe consistant en l'hydrogène, l'hélium et leurs mélanges, par l'interaction des neutrons avec le matériau sensible aux neutrons ;
obtenir un second motif de biréfringence optique introduit par une contrainte du câble à fibre optique après le positionner dans l'emplacement présélectionné ;
mesurer un changement entre le premier et second motif de biréfringence optique introduits par une contrainte, le changement étant produit par une montée en pression du gaz dans le câble à fibre optique ; et
déterminer une quantité du gaz dans le câble à fibre optique et la nombre des neutrons absorbés par le matériau sensible aux neutrons, afin de déterminer l'exposition totale aux neutrons dans l'emplacement présélectionné.

10. Procédé selon la revendication 9, dans lequel la mesure est effectuée par un outil de mesure optique.
